# EUROPÄISCHE PATENTSCHRIFT

(11) **EP 2 768 159 B1**
(45) Veröffentlichungstag und Bekanntmachung des Hinweises auf die Patenterteilung: **24.05.2017**
(21) Anmeldenummer: 13000776.8
(22) Anmeldetag: 14.02.2013
(51) Int. Cl.: H04B 10/00, G02B 6/36

(54) **Vorrichtung zum Übertragen von Signalen zwischen zwei drehbaren Baueinheiten**
Device for transmitting signals between two rotatable modules
Dispositif de transmission de signaux entre deux unités de construction rotatives

(43) Veröffentlichungstag der Anmeldung: 20.08.2014
(73) Patentinhaber: LTN Servotechnik GmbH, 83624 Otterfing (DE)
(72) Erfinder: Angerpointner, Ludwig, 81274 München (DE); Autenzeller, Peter, 83620 Feldkirchen-Westerham (DE)
(74) Vertreter: Hofmann, Ernst

(56) Entgegenhaltungen:
- US-A- 4 842 355
- US-A1- 2007 065 158
- US-A1- 2008 069 495
- US-A1- 2012 057 818

## Beschreibung

Die Erfindung betrifft eine Vorrichtung zum Übertragen von elektrischen Signalen zwischen zwei relativ zueinander drehbaren Baueinheiten, gemäß dem Anspruch 1.

Derartige Baueinheiten werden häufig auch als Rotor und Stator bezeichnet. In diesen Baueinheiten werden elektrische Signale in optische Signale umgewandelt und über eine Luftstrecke berührungslos zu einem Fotodetektor geführt, wo sie wieder in elektrische Signale umgewandelt werden. Derartige Vorrichtungen werden in vielen technischen Gebieten eingesetzt um elektrische Signale von einer ortsfesten auf eine sich drehende elektrische Einheit zu übertragen.

In der Patentschrift DE 44 28 790 C1 ist eine Vorrichtung zur bidirektionalen Informationsübertragung offenbart, bei der fotoelektrische Empfänger und Sender exzentrisch in Bezug auf die Rotationsachse angeordnet sind.

Aus der US-Offenlegungsschrift 2012/0057818 ist eine drehbare optische Datenübertragungsvorrichtung bekannt, bei der sich Lichtführungselemente in radialer Richtung erstrecken, so dass der Verlauf eines Strahlengangs zweimal um 90° umgelenkt wird.

Der Erfindung liegt die Aufgabe zugrunde, eine Vorrichtung zum Übertragen von Signalen zu schaffen, welche sehr hohe Übertragungsraten und dennoch vergleichsweise einfach herstellbar erlaubt.

Mit Vorteil sind zur Übertragung von Signalen auf dem ersten Kanal das Leuchtmittel und der Fotodetektor koaxial bezüglich der Achse, um welche die Baueinheiten drehbar sind, angeordnet. Demnach sind das Leuchtmittel und der Fotodetektor geometrisch so angeordnet, dass diese von der Achse durchdrungen beziehungsweise geschnitten werden. Insbesondere kann eine Symmetrielinie des Strahlengangs des optischen Signals des ersten Kanals deckungsgleich mit der Achse bzw. identisch mit der Achse sein. Mit Vorteil ist die Vorrichtung so konfiguriert, dass der Strahlengang des optischen Signals des ersten Kanals koaxial und konzentrisch zur Achse verläuft.

In weiterer Ausgestaltung der Erfindung sind die Empfängerschaltung oder die Senderschaltung oder beide mit größerem Abstand von der Achse angeordnet als der Abstand des Leuchtmittels von der Achse. Alternativ oder ergänzend können zudem die Empfängerschaltung oder die Senderschaltung oder beide mit größerem Abstand von der Achse angeordnet sein als der Abstand des Fotodetektors von der Achse. Mit anderen Worten sind die Empfängerschaltung oder die Senderschaltung oder beide mit radialem Versatz (radial außerhalb) gegenüber dem Leuchtmittel und / oder dem Fotodetektor angeordnet. Für den bevorzugten Fall, dass die Mitte des Leuchtmittels oder des Fotodetektors auf der Achse, um welche die Baueinheiten drehbar sind, angeordnet ist, weist der Abstand des Leuchtmittels oder des Fotodetektors von der Achse den Wert null auf.

Demnach ist die Empfängerschaltung und / oder die Senderschaltung zur Übertragung von Signalen auf dem ersten Kanal radial außerhalb gegenüber dem Strahlengang des optischen Signals des ersten Kanals angeordnet beziehungsweise radial versetzt zum Strahlengang des optischen Signals des ersten Kanals. Die Vorrichtung kann insbesondere so konfiguriert sein, dass das Leuchtmittel und der Fotodetektor von der Achse durchdrungen werden, während die Empfängerschaltung und / oder die Senderschaltung zur Übertragung von Signalen auf dem ersten Kanal nicht von der (Dreh-) Achse durchdrungen werden. Die Empfängerschaltung und / oder die Senderschaltung sind also in der Vorrichtung so angeordnet, dass diese außerhalb eines Bereichs liegen der als Verlängerung des Strahlengangs des optischen Signals des ersten Kanals gelten kann.

In Weiterbildung der Erfindung ist die elektrische Verbindungsleitung so ausgestaltet, dass diese auch zur mechanischen Fixierung beziehungsweise zur Halterung des Leuchtmittels oder des Fotodetektors dient.

Weiterhin kann die zumindest eine elektrische Verbindungsleitung an einem Pin des Leuchtmittels oder an einem Pin des Fotodetektors kontaktiert sein.

In vorteilhafter Ausgestaltung der Erfindung kann der mit radialer Richtungskomponente verlaufende Abschnitt der elektrischen Verbindungsleitung an einer Leiterplatte, welche bezüglich der zumindest einen elektrische Verbindungsleitung radial außen liegt, kontaktiert sein. Die betreffende Leiterplatte kann beispielsweise ringsegmentförmig sein oder die Form eines geschlossenen Rings aufweisen.

Zur Übertragung auf dem zweiten Kanal weist die erste Baueinheit vorteilhafterweise ein weiteres Leuchtmittel und eine damit verbundene weitere elektronische Senderschaltung auf. Die zweite Baueinheit weist dann einen weiteren Fotodetektor und eine damit verbundene weitere elektronische Empfängerschaltung auf.

Alternativ kann gleichermaßen die erste Baueinheit den weiteren Fotodetektor und die damit verbundene weitere elektronische Empfängerschaltung aufweisen. In diesem Fall kann dann die zweite Baueinheit das weitere Leuchtmittel und die damit verbundene weitere elektronische Senderschaltung umfassen.

Zur Übertragung auf dem zweiten Kanal kann die erste Baueinheit ein erstes optisches Element und die zweite Baueinheit ein zweites optisches Element aufweisen, wobei eines der optischen Elemente (das erste oder das zweite) axial zwischen dem weiteren Leuchtmittel (für den zweiten Kanal) und dem Fotodetektor, welcher für die Übertragung auf dem ersten Kanal bestimmt ist, angeordnet sein kann. Alternativ oder ergänzend kann zur Übertragung auf dem zweiten Kanal die erste Baueinheit das erste optisches Element und die zweite Baueinheit das zweite optische Element aufweisen, wobei eines der optischen Elemente (das erste oder das zweite) axial zwischen dem weiteren Leuchtmittel (für den zweiten Kanal) und dem Leuchtmittel, welches für die Übertragung auf dem ersten Kanal bestimmt ist, angeordnet sein kann.

Mit Vorteil weisen zur Übertragung auf dem zweiten Kanal die erste Baueinheit ein erstes optisches Element und die zweite Baueinheit ein zweites optisches Element auf, wobei eines der optischen Elemente axial zwischen dem weiteren Fotodetektor und dem Fotodetektor, welcher für die Übertragung auf dem ersten Kanal bestimmt ist, oder dem Leuchtmittel, welches für die Übertragung auf dem ersten Kanal bestimmt ist, angeordnet ist.

In weiterer Ausgestaltung der Erfindung ist das erste und / oder das zweite optische Element als eine konvexe Linse ausgestaltet. Insbesondere können das erste oder das zweite optische Element oder beide optischen Elemente als eine plan-konvexe Linse ausgestaltet sein. Alternativ können beispielsweise auch achromatische Linsen zum Einsatz kommen.

In weiterer Ausgestaltung der Erfindung können das Leuchtmittel, welches für die Übertragung auf dem ersten Kanal bestimmt ist, und das weitere Leuchtmittel, welches für die Übertragung auf dem zweiten Kanal bestimmt ist, bezüglich der Achse koaxial angeordnet sein. Ebenso können der Fotodetektor, welcher für die Übertragung auf dem ersten Kanal bestimmt ist, sowie der weitere Fotodetektor, welcher für die Übertragung auf dem ersten Kanal bestimmt ist, bezüglich der Achse koaxial angeordnet sein. Demnach können also das Leuchtmittel, welches für die Übertragung auf dem ersten Kanal bestimmt ist, das weitere Leuchtmittel, welches für die Übertragung auf dem zweiten Kanal bestimmt ist, der Fotodetektor, welcher für die Übertragung auf dem ersten Kanal bestimmt ist, und der weitere Fotodetektor, welcher für die Übertragung auf dem ersten Kanal bestimmt ist, so angeordnet sein dass diese allesamt von der (Dreh-) Achse durchdrungen werden. Insbesondere können deren Mitten (in Bezug auf die betreffenden optischen Funktionen) von der (Dreh-) Achse durchdrungen werden.

Mit Vorteil weist die erste Baueinheit ein drittes optisches Element und die zweite Baueinheit ein viertes optisches Element auf zur Formung des Strahlengangs des optischen Signals des ersten Kanals. Das dritte und das vierte optische Element können als Linsen ausgestaltet sein.

In weiterer Ausgestaltung der Erfindung kann die Empfängerschaltung und / oder die Senderschaltung (jeweils für die Übertragung auf dem ersten Kanal) mit radialem Versatz, also radial nach außen hin versetzt, gegenüber dem Leuchtmittel (für die Übertragung auf dem ersten Kanal), dem Fotodetektor (für die Übertragung auf dem ersten Kanal), dem ersten optischen Element (für die Übertragung auf dem zweiten Kanal) und dem zweiten optischen Element (für die Übertragung auf dem zweiten Kanal) angeordnet sein.

Weiterhin ist mit Vorteil die Empfängerschaltung und / oder die Senderschaltung (jeweils für die Übertragung auf dem ersten Kanal) mit radialem Versatz, also radial nach außen hin versetzt, gegenüber dem dritten optischen Element (für die Übertragung auf dem ersten Kanal) und dem vierten optischen Element (für die Übertragung auf dem ersten Kanal) angeordnet.

Die Vorrichtung kann mit Vorteil so ausgestaltet sein, dass die optische Achse des optischen Signals zur Übertragung auf dem ersten Kanal und die optische Achse des optischen Signals zur Übertragung auf dem zweiten Kanal identisch sind. Insbesondere können diese optischen Achsen deckungsgleich mit der Achse sein, um welche die Baueinheiten relativ zueinander drehbar sind.

Durch die erfindungsgemäße Vorrichtung ist es nun möglich Signale mit einer hervorragenden Qualität zu übertragen, so dass es extrem hohe Datenraten in der Größenordnung von 10 Gbps oder mehr erreichbar sind.

Vorteilhafte Ausbildungen der Erfindung entnimmt man den abhängigen Ansprüchen.

Weitere Einzelheiten und Vorteile der erfindungsgemäßen Vorrichtung ergeben sich aus der nachfolgenden Beschreibung eines Ausführungsbeispiels anhand der beiliegenden Figuren.

Es zeigen die
- Figur 1: eine Längsschnittdarstellung einer Vorrichtung zum zweikanaligen Übertragen von Signalen,
- Figur 2: eine Detailansicht von Bauteilen zu Übertragen von Signalen,
- Figur 3a: eine Detailansicht der Befestigung eines Leuchtmittels,
- Figur 3b: eine Detailansicht einer Ausgestaltung einer Verbindungsleitung.

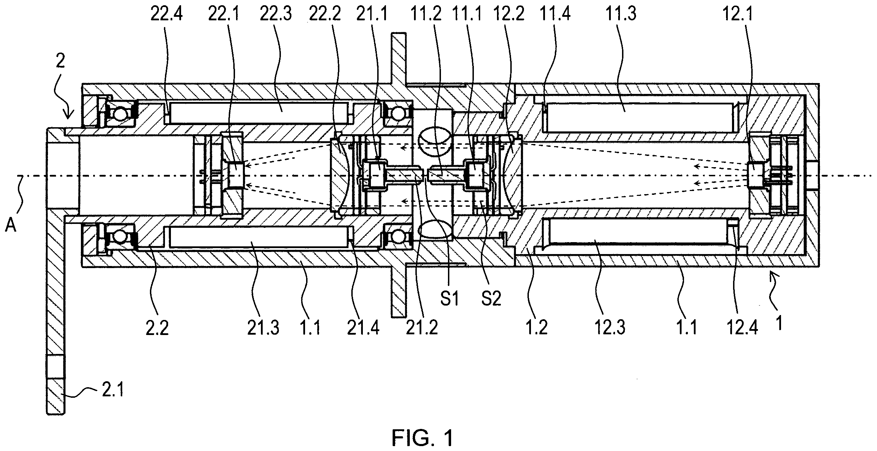

Gemäß der Figur 1 umfasst die erfindungsgemäße Vorrichtung eine erste Baueinheit, die als Rotor 1 bezeichnet werden kann und eine zweite Baueinheit, im Folgenden Stator 2 genannt. Die Vorrichtung dient zum Übertragen von elektrischen Signalen mit hoher Übertragungsrate zwischen dem Rotor 1 und dem Stator 2, wobei der Rotor 1 und der Stator 2 relativ zueinander um eine Achse A drehbar angeordnet sind. Der Stator 2 ist gegenüber dem Rotor 1 mit Wälzlagern 3 gelagert.

Der Rotor 1 weist ein in erster Näherung rohrförmiges Gehäuse 1.1 auf. Innerhalb dieses Gehäuses 1.1 befindet sich ein rotorseitiger Halter 1.2, welcher Ausnehmungen bzw. Taschen aufweist, in welchen Leiterplatten angeordnet sind. Auf einer der Leiterplatten ist eine elektronische Empfängerschaltung 11.3 montiert und auf einer anderen Leiterplatte eine elektronische Senderschaltung 12.3. Weiterhin befindet sich am Halter 1.2 ein Fotodetektor 11.1, der über eine Verbindungsleitung 11.4 elektrisch mit der Empfängerschaltung 11.3 in Kontakt ist. Analog hierzu ist ein rotorseitiges Leuchtmittel 12.1 elektrisch mit der Senderschaltung 12.3 über eine Verbindungsleitung 12.4 verbunden. Das vom Leuchtmittel 12.1 emittierbare Licht kann durch eine Linse 12.2, die ebenfalls am Halter 1.2 montiert ist kollimiert werden. Am Fotodetektor 11.1 ist zudem eine weitere Linse 11.2 angeordnet. Der Halter 1.2 ist einstückig präzise gefertigt, so dass die daran montierten Elemente, insbesondere das Leuchtmittel 12.1, die Linse 12.2 und der Fotodetektor 11.1 auf vergleichsweise einfache Weise exakt zueinander angeordnet werden können.

Im Gehäuse 1.1 des Rotors 1, der mit Hilfe der Wälzlager 3 drehbar ist, befindet sich ein statorseitiger Halter 2.2. Auch der statorseitige Halter 2.2 weist Ausnehmungen bzw. Taschen auf, in welchen Leiterplatten angeordnet sind. Auf einer der Leiterplatten ist eine statorseitige elektronische Senderschaltung 21.3 montiert, während auf einer anderen Leiterplatte eine statorseitige elektronische Empfängerschaltung 22.3 angeordnet ist. Ferner ist am Halter 2.2 eine Drehmomentstütze 2.1 befestigt. Am Halter 2.2 ist weiterhin ein Fotodetektor 22.1 montiert, der über eine Verbindungsleitung 22.4 elektrisch mit der Empfängerschaltung 22.3 in Kontakt ist. Analog hierzu ist ein Leuchtmittel 21.1 elektrisch mit der Senderschaltung 21.3 über eine Verbindungsleitung 21.4 verbunden. Das vom Leuchtmittel 21.1 emittierbare Licht kann durch eine Linse 21.2 kollimiert werden. Auch der Halter 2.2 ist einstückig präzise gefertigt, so dass die daran montierten Elemente, insbesondere der Fotodetektor 22.1, die Linse 21.2 und das Leuchtmittel 21.1 auf vergleichsweise einfache Weise exakt zueinander angeordnet werden können.

Im vorliegenden Ausführungsbeispiel handelt es sich bei den Linsen 12.2, 22.2 jeweils um eine Kollimatorlinse, die als plan-konvexe Linse ausgestaltet ist. Am Fotodetektor 11.1 und am Leuchtmittel 21.1 ist jeweils eine weitere Linse 11.2, 21.2 angeordnet, die hier als GRIN-Linse beispielhaft dargestellt ist. Alternativ können an dieser Stelle beispielsweise auch achromatische Linsen zum Einsatz kommen.

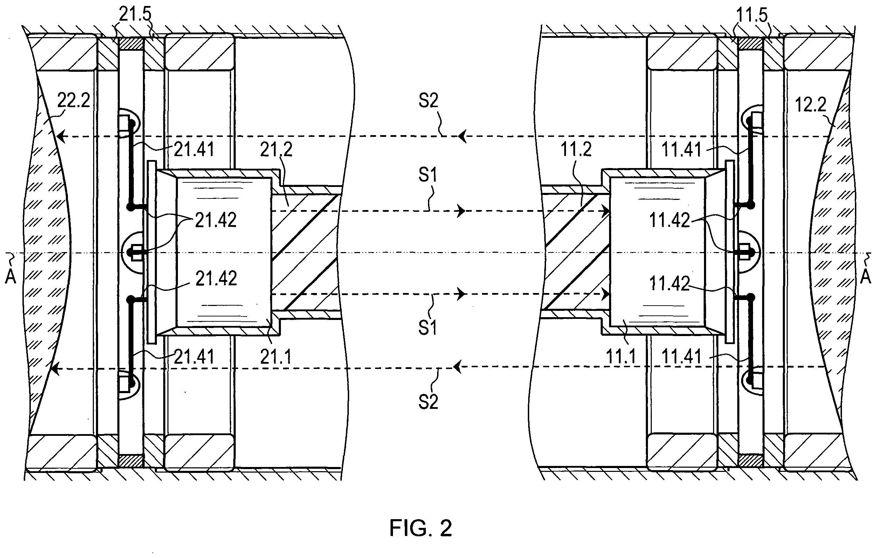

Die Vorrichtung dient zum zweikanaligen bidirektionalen Übertragen von elektrischen Signalen zwischen dem Rotor 1 und dem Stator 2. Über ein in den Figuren nicht näher dargestelltes Kabel werden zur Übertragung der Signale auf einem ersten Kanal zunächst diese Signale zusammen mit einem elektrischen Strom zur Leistungsversorgung in die Senderschaltung 21.3 eingespeist. Dort werden die Signale entsprechend aufbereitet und zusammen mit dem elektrischen Strom über die Verbindungsleitung 21.4 dem Leuchtmittel 21.1 zugeführt. Das Leuchtmittel 21.1, welches im vorgestellten Ausführungsbeispiel als eine Laserdiode ausgestaltet ist, emittiert Licht, so dass also das elektrische Signal durch die Senderschaltung 21.3 und durch das Leuchtmittel 21.1 in ein optisches Signal gewandelt wird. Der Strahlengang S1 (Figur 2) des optischen Signals des ersten Kanals wird durch die Linse 21.2 kollimiert.

Mit axialem Luftspalt zu dieser statorseitigen Linse 21.2 beabstandet befindet sich die Linse 11.2 am Rotor 1. Durch diese wird das optische Signal des ersten Kanals dem Fotodetektor 11.1 zugeführt. Über die Verbindungsleitung 11.4 steht der Fotodetektor 11.1 in elektrischem Kontakt zur Empfängerschaltung 11.3. Durch den Fotodetektor 11.1 und durch die Empfängerschaltung 11.3 wird das optische Signal in ein elektrisches Signal gewandelt, welches mit Hilfe eines in den Figuren nicht näher dargestellten Kabels an ein gegenüber dem Stator 1 rotierendes Bauelement übertragen wird.

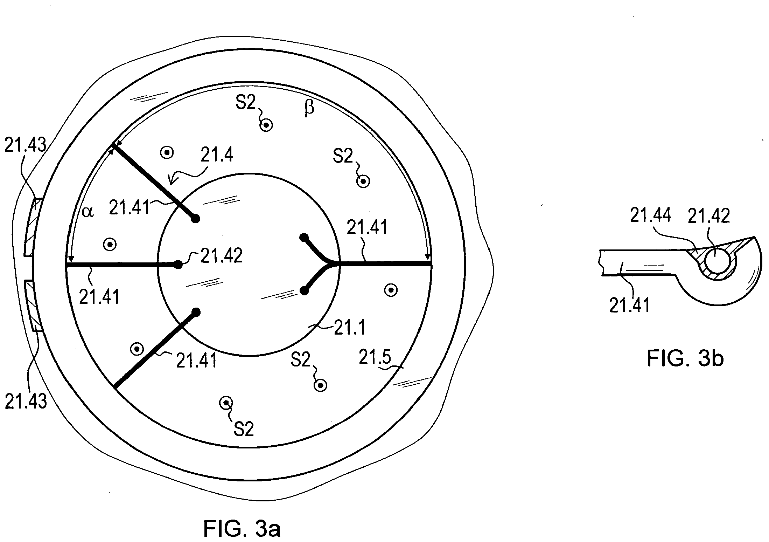

Die Verbindungsleitungen 11.4, 21.4 weisen jeweils einen radialen Abschnitt 11.41, 21.41 auf. Unter anderem sind in der Figur 3a diese am Beispiel der elektrischen Anbindung des Leuchtmittels 21.1 dargestellt. Die radialen Abschnitte 11.41, 21.41 sind hier als in Radialrichtung orientierte Drähte ausgestaltet. Die Drähte haben im vorgestellten Ausführungsbeispiel eine Dicke von 0,2 mm auf. Sowohl der Fotodetektor 11.1 als auch das Leuchtmittel 21.1 des ersten Kanals weisen Pins 11.42, 21.42 auf, die als in Axialrichtung orientierte Abschnitte der Verbindungsleitungen 11.4, 21.4 bezeichnet werden können. Die radial innen liegenden Enden der radialen Abschnitte 11.41, 21.41 sind durch eine Lötung mit den Pins 11.42, 21.42 verbunden.

Die anderen Enden der radialen Abschnitte 11.41, 21.41, also die radial außen liegenden Enden, sind mit Leiterbahnen auf ringförmigen Leiterplatten 21.5 elektrisch verbunden. Die Kontaktierungspunkte der radial außen liegenden Enden der radialen Abschnitte 11.41, 21.41 sind in Umfangsrichtung versetzt angeordnet, damit eine möglichst steife mechanische Anbindung des Fotodetektors 11.1 und des Leuchtmittels 21.1 erreicht wird. In diesem Zusammenhang ist es vorteilhaft, wenn die Kontaktpunkte mit einem Winkelversatz α, β von mindestens 20° voneinander beabstandet sind, beziehungsweise die radialen Abschnitte 11.41, 21.41 divergierend in einem Winkel α, β von mindestens 20° zueinander ausgerichtet sind.

Die Leiterbahnen verlaufen entlang der Umfangsrichtung entsprechend der Leiterplattenform. Die Enden der Leiterbahnen sind mit mehradrigen Flexleitern 21.43 elektrisch verbunden. Die Flexleiter 21.43 führen zur Senderschaltung 21.3 und sind mit dieser elektrisch kontaktiert. Die statorseitige Verbindungsleitung 21.4 umfasst also die Flexleiter 21.43, die radialen Abschnitte 21.41 und die Pins 21.42. Analog hierzu umfasst dann die rotorseitige Verbindungsleitung 11.4 ebenso Flexleiter, die radialen Abschnitte 11.41 und die Pins 11.42.

Die Pins 11.42, 21.42 und die radialen Abschnitte 11.41, 21.41 der Verbindungsleitungen 11.4, 21.4 dienen also zu elektrischen Anbindung des Leuchtmittels 21.1 beziehungsweise des Fotodetektors 11.1 des ersten Kanals aber auch zur mechanischen Befestigung des Leuchtmittels 21.1 beziehungsweise des Fotodetektors 11.1. Damit diese mechanischen Befestigung gleichzeitig eine optimale koaxiale Ausrichtung des Leuchtmittels 21.1 und des Fotodetektors 11.1 und den dazugehörigen Linsen 11.2, 21.2 gewährleistet, wird eine spezielle Verbindungstechnik angewendet. In der Figur 3b ist beispielhaft eine Detailansicht der Kontaktstelle zwischen einem radialen Abschnitt 21.41 und einem Pin 21.42 gezeigt. Im Zuge der Montage wird zunächst das als Öse ausgestaltete radial innen liegende Ende des radialen Abschnitts 21.41 der Verbindungsleitung 21.4 so platziert, dass der Pin 21.42 von dieser umgeben wird. Dabei liegt keine Berührung zwischen dem Pin 21.42 und dem Ende des radialen Abschnitts 21.41 vor. Sämtliche radiale Abschnitte 21.41 werden zunächst auf dieselbe Weise in der Nähe der Pins 21.42 des Leuchtmittel 21.1 angeordnet. Der Luftspalt zwischen dem Pin 21.42 und dem Ende des radialen Abschnitts 21.41 ist so groß bemessen, dass auch beim darauffolgenden Ausrichten bzw. Justieren keine Berührung erfolgen wird, so dass eine aus mechanischer Sicht spannungsfreie Relativbewegung zwischen diesen Teilen während des Justierens möglich ist. Das Leuchtmittel 21.1 wird so justiert, dass dessen Strahlengang S1 mit minimaler Toleranzabweichung koaxial parallel zur Achse A verläuft. Nachfolgend werden die Pins 21.42 des Leuchtmittels 21.1 mit den radial innen liegenden Enden der radialen Abschnitte 21.41 verlötet. Demgemäß füllt Lotmaterial 21.44 den Spalt zwischen den Pins 21.42 und den Enden der radialen Abschnitte 21.41 aus, ohne dass sich die Pins 21.42 und die Enden der radialen Abschnitte 21.41 berühren. Somit kann eine mechanische Vorspannung infolge der Justierung vermieden werden.

Nach dem gleichen Prinzip werden nach der Justierung des Fotodetektors 11.1 auch rotorseitig die Pins 12.42 mit den radialen Abschnitten 11.41 der Verbindungsleitungen 12.4 verlötet um eine elektrische Anbindung des Fotodetektors 11.1 und gleichzeitig eine präzise koaxiale Justierung des Fotodetektors 11.1 mit der Linse 11.2 zu erreichen.

Eine Signalübertragung auf einem zweiten Kanal verläuft im vorgestellten Ausführungsbeispiel in entgegengesetzter Richtung in Bezug auf die Signalübertragung auf dem ersten Kanal, wie dies beispielsweise in der Figur 2 dargestellt ist. Demgemäß werden über ein in den Figuren nicht näher dargestelltes Kabel zur Übertragung von Signalen auf einem zweiten Kanal zunächst diese Signale zusammen mit einem elektrischen Strom zur Leistungsversorgung in die rotorseitige Senderschaltung 12.3 eingespeist. Dort werden die Signale entsprechend aufbereitet und zusammen mit dem elektrischen Strom über die Verbindungsleitung 12.4 dem Leuchtmittel 12.1 zugeführt. Das Leuchtmittel 12.1, welches im vorgestellten Ausführungsbeispiel ebenfalls als eine Laserdiode ausgestaltet ist, emittiert Licht, so dass also das elektrische Signal durch die Senderschaltung 12.3 und durch das Leuchtmittel 12.1 in ein weiteres optisches Signal gewandelt wird. Der Strahlengang S2 des optischen Signals des zweiten Kanals wird durch die plan-konvexe Linse 12.2 kollimiert. Der Strahlengang S2 verläuft also nach passieren der Linse 12.2 in Axialrichtung, parallel zur Achse A (siehe etwa die Figur 2). Weiterhin verläuft der Strahlengang S2 zur Übertragung von Signalen auf dem zweiten Kanal radial außerhalb gegenüber dem Strahlengang S1 des ersten Kanals. Der Strahlengang S2 verläuft zudem vorbei an den Abschnitten 11.41, 21.41 der Verbindungsleitungen 11.4, 21.4, siehe auch die Darstellung in der Figur 3a, wo beispielhaft für den Strahlengang S2 Pfeile in der Draufsicht gezeichnet sind. Der Strahlengang S2 wird dann durch die statorseitige Linse 22.2 fokussiert beziehungsweise gebündelt, so dass das optische Signal des zweiten Kanals dem Fotodetektor 22.1 zugeführt wird. Über die Verbindungsleitung 22.4 steht der Fotodetektor 22.1 in elektrischem Kontakt zur Empfängerschaltung 22.3. Durch den Fotodetektor 22.1 und durch die Empfängerschaltung 22.3 wird das optische Signal in ein elektrisches Signal gewandelt, welches mit Hilfe eines in den Figuren nicht näher dargestellten Kabels an ein nicht rotierendes Bauelement übertragen wird.

Sowohl die optischen Elemente des ersten Kanals (das Leuchtmittel 21.1, die Linse 21.2, der Fotodetektor 11.1 und die Linse 11.2) als auch die optischen Elemente des zweiten Kanals (das weitere Leuchtmittel 12.1, die Linse 12.2, der weitere Fotodetektor 22.1 und die Linse 22.2) sind bezüglich der Achse A koaxial angeordnet. Demnach ist die optische Achse der optischen Signale des ersten Kanals deckungsgleich bezüglich der optischen Achse der optischen Signale des zweiten Kanals angeordnet. Ferner weist die Vorrichtung einen Bereich auf, in dem der erste Strahlengang S1 (erster Kanal) eine zylindrische Gestalt aufweist und der zweite Strahlengang S2 (zweiter Kanal) konzentrisch radial außerhalb des ersten Strahlengang S1 verläuft. Insbesondere kann der zweite Strahlengang S2 eine hohlzylindrische Gestalt aufweisen.

Die Senderschaltungen 21.3, 12.3 und die Empfängerschaltungen 11.3, 22.3 sind mit radialem Versatz, also radial nach außen hin versetzt, in Bezug auf das Leuchtmittel 21.1, die Linse 21.2, der Fotodetektor 11.1, die Linse 11.2 das weitere Leuchtmittel 12.1, die Linse 12.2, der weitere Fotodetektor 22.1 und die Linse 22.2 angeordnet.

Diese Bauweise bringt unter anderem den Vorteil mit sich, dass bezüglich elektromagnetischer Störeinflüsse eine überaus robuste Anordnung möglich ist, so dass sehr hohe Übertragungsraten erreichbar werden. Überraschenderweise sind die durch die radialen Abschnitte 11.41, 21.41 der Verbindungsleitungen 11.4, 21.4 verursachten Abschattungen für die Übertragungsraten von untergeordneter Bedeutung. In die Vorrichtung können elektrische Signale in eine Baueinheit eingespeist und an der anderen Baueinheit abgenommen werden und umgekehrt. Die Umwandlung in optische Signale und die Rückwandlung in elektrische Signale erfolgt gemäß dem Ausführungsbeispiel innerhalb der Vorrichtung.

## Patentansprüche

1. Vorrichtung zum zweikanaligen Übertragen von Signalen zwischen zwei relativ zueinander um eine Achse (A) drehbaren Baueinheiten (1, 2), wobei
die erste Baueinheit (1) einen Fotodetektor (11.1) und eine elektronische Empfängerschaltung (11.3) sowie zumindest eine Verbindungsleitung (11.4) zwischen dem Fotodetektor (11.1) und der Empfängerschaltung (11.3) aufweist,
die zweite Baueinheit (2) ein Leuchtmittel (21.1) und eine elektronische Senderschaltung (21.3) sowie zumindest eine Verbindungsleitung (21.4) zwischen dem Leuchtmittel (21.1) und der Senderschaltung (21.3) aufweist, wobei
die zumindest eine Verbindungsleitung (11.4, 21.4) der ersten Baueinheit (1) und / oder der zweiten Baueinheit (2) zumindest einen mit radialer Richtungskomponente verlaufenden Abschnitt (11.41, 21.41) aufweist, und
zur Übertragung eines elektrischen Signals auf einem ersten Kanal dieses elektrische Signal durch die Senderschaltung (21.3) und das Leuchtmittel (21.1) in ein optisches Signal wandelbar ist, welches durch den Fotodetektor (11.1) und die Empfängerschaltung (11.3) wieder in ein elektrisches Signal wandelbar ist, und
auf einem zweiten Kanal ein weiteres optisches Signal übertragbar ist, dessen Strahlengang (S2) mit axialer Richtungskomponente radial außerhalb gegenüber dem Strahlengang (S1) des optischen Signals des ersten Kanals vorbei an dem Abschnitt (11.41, 21.41) der zumindest einen Verbindungsleitung (11.4, 21.4) verläuft, wobei zur Übertragung auf dem zweiten Kanal
a) die erste Baueinheit (1) ein weiteres Leuchtmittel (12.1) und eine damit verbundene weitere elektronische Senderschaltung (12.3) und die zweite Baueinheit (2) einen weiteren Fotodetektor (22.1) und eine damit verbundene weitere elektronische Empfängerschaltung (22.3) aufweist oder
b) die erste Baueinheit (1) den weiteren Fotodetektor (22.1) und eine und die damit verbundene weitere elektronische Empfängerschaltung (22.3) und die zweite Baueinheit (2) das weitere Leuchtmittel (12.1) und die damit verbundene weitere elektronische Senderschaltung (12.3) aufweist, wobei
das Leuchtmittel (21.1) und das weitere Leuchtmittel (12.1) sowie der Fotodetektor (11.1) und der weitere Fotodetektor (22.1) bezüglich der Achse (A) koaxial angeordnet sind.

2. Vorrichtung gemäß dem Anspruch 1, wobei das Leuchtmittel (21.1) und der Fotodetektor (11.1) geometrisch so angeordnet sind, dass diese von der Achse (A) durchdrungen werden.

3. Vorrichtung gemäß einem der vorhergehenden Ansprüche, wobei die Empfängerschaltung (11.3) und / oder die Senderschaltung (21.3) mit größerem Abstand von der Achse (A) angeordnet ist als der Abstand des Leuchtmittels (21.1) oder des Fotodetektor (11.1) von der Achse (A).

4. Vorrichtung gemäß einem der vorhergehenden Ansprüche, wobei die zumindest eine Verbindungsleitung (11.4, 21.4) auch zur mechanischen Fixierung des Leuchtmittels (21.1) oder des Fotodetektors (11.1) dient.

5. Vorrichtung gemäß einem der vorhergehenden Ansprüche, wobei die zumindest eine Verbindungsleitung (11.4, 21.4) an einem Pin (11.42; 21.42) des Leuchtmittels (21.1) oder des Fotodetektors (11.1) kontaktiert ist.

6. Vorrichtung gemäß einem der vorhergehenden Ansprüche, wobei der mit radialer Richtungskomponente verlaufenden Abschnitt (11.41, 21.41) an einer Leiterplatte (11.5, 21.5), welche bezüglich der zumindest einen Verbindungsleitung (11.4, 21.4) radial außen liegt, kontaktiert ist.

7. Vorrichtung gemäß einem der vorhergehenden Ansprüche, wobei die erste Baueinheit (1) ein erstes optisches Element (12.2) und die zweite Baueinheit (2) ein zweites optisches Element (22.2) aufweisen, wobei eines der optischen Elemente (12.2, 22.2) axial zwischen dem weiteren Leuchtmittel (12.1) und dem Fotodetektor (11.1) für den ersten Kanal oder dem Leuchtmittel (21.1) für den ersten Kanal angeordnet ist.

8. Vorrichtung gemäß einem der vorhergehenden Ansprüche, wobei die erste Baueinheit (1) ein erstes optisches Element (12.2) und die zweite Baueinheit (2) ein zweites optisches Element (22.2) aufweisen, wobei eines der optischen Elemente (12.2, 22.2) axial zwischen dem weiteren Fotodetektor (22.1) und dem Fotodetektor (11.1) für den ersten Kanal oder dem Leuchtmittel (21.1) für den ersten Kanal angeordnet ist.

9. Vorrichtung gemäß dem Anspruch 7 oder 8, wobei das erste und / oder das zweite optische Element (11.2, 21.2) als eine konvexe Linse ausgestaltet ist.

10. Vorrichtung gemäß dem Anspruch 9, wobei das erste und / oder das zweite optische Element (11.2, 21.2) als eine plan-konvexe Linse ausgestaltet ist.

11. Vorrichtung gemäß einem der Ansprüche 7 bis 10, wobei die Empfängerschaltung (11.3) und / oder die Senderschaltung (21.3) mit radialem Versatz gegenüber dem Leuchtmittel (21.1), dem Fotodetektor (11.1), dem ersten optischen Element (12.2) und dem zweiten optischen Element (22.2) angeordnet sind.

12. Vorrichtung gemäß einem der vorhergehenden Ansprüche, wobei die erste Baueinheit (1) ein drittes optisches Element (11.2) und die zweite Baueinheit (2) ein viertes optisches Element (21.2) aufweist zur Formung des Strahlengangs (S1) des optischen Signals des ersten Kanals.

13. Vorrichtung gemäß dem Anspruch 12, wobei die Empfängerschaltung (11.3) und / oder die Senderschaltung (21.3) mit radialem Versatz gegenüber dem dritten optischen Element (12.2) und dem vierten optischen Element (21.2) angeordnet sind.

## Claims

1. Device for two-channel transmission of signals between two assemblies (1, 2) that are rotatable relative to one another about an axis (A), wherein the first assembly (1) comprises a photodetector (11.1) and an electronic receiver circuit (11.3) and also at least one connecting line (11.4) between the photodetector (11.1) and the receiver circuit (11.3),
the second assembly (2) comprises an illuminant (21.1) and an electronic transmitter circuit (21.3) and also at least one connecting line (21.4) between the illuminant (21.1) and the transmitter circuit (21.3), wherein
the at least one connecting line (11.4, 21.4) of the first assembly (1) and/or of the second assembly (2) comprises at least one section (11.41, 21.41) extending with a radial direction component, and
in order to transmit an electrical signal on a first channel, said electrical signal is convertible into an optical signal by the transmitter circuit (21.3) and the illuminant (21.1), which optical signal is convertible again into an electrical signal by the photodetector (11.1) and the receiver circuit (11.3), and
on a second channel a further optical signal is transmittable, the beam path (S2) of which extends with an axial direction component radially outside relative to the beam path (S1) of the optical signal of the first channel past the section (11.41, 21.41) of the at least one connecting line (11.4, 21.4), wherein for transmission on the second channel
a) the first assembly (1) comprises a further illuminant (12.1) and a further electronic transmitter circuit (12.3) connected thereto, and the second assembly (2) comprises a further photodetector (22.1) and a further electronic receiver circuit (22.3) connected thereto, or
b) the first assembly (1) comprises the further photodetector (22.1) and a and the further electronic receiver circuit (22.3) connected thereto, and the second assembly (2) comprises the further illuminant (12.1) and the further electronic transmitter circuit (12.3) connected thereto, wherein
the illuminant (21.1) and the further illuminant (12.1) and also the photodetector (11.1) and the further photodetector (22.1) are arranged coaxially in relation to the axis (A).

2. Device according to Claim 1, wherein the illuminant (21.1) and the photodetector (11.1) are arranged geometrically such that the axis (A) penetrates through them.

3. Device according to either of the preceding claims, wherein the receiver circuit (11.3) and/or the transmitter circuit (21.3) are/is arranged at a greater distance from the axis (A) than the distance between the illuminant (21.1) or the photodetector (11.1) and the axis (A).

4. Device according to any of the preceding claims, wherein the at least one connecting line (11.4, 21.4) also serves for mechanically fixing the illuminant (21.1) or the photodetector (11.1).

5. Device according to any of the preceding claims, wherein the at least one connecting line (11.4, 21.4) is contacted at a pin (11.42; 21.42) of the illuminant (21.1) or of the photodetector (11.1).

6. Device according to any of the preceding claims, wherein the section (11.41, 21.41) extending with a radial direction component is contacted at a printed circuit board (11.5, 21.5) situated radially outside in relation to the at least one connecting line (11.4, 21.4).

7. Device according to any of the preceding claims, wherein the first assembly (1) comprises a first optical element (12.2) and the second assembly (2) comprises a second optical element (22.2), wherein one of the optical elements (12.2, 22.2) is arranged axially between the further illuminant (12.1) and the photodetector (11.1) for the first channel or the illuminant (21.1) for the first channel.

8. Device according to any of the preceding claims, wherein the first assembly (1) comprises a first optical element (12.2) and the second assembly (2) comprises a second optical element (22.2), wherein one of the optical elements (12.2, 22.2) is arranged axially between the further photodetector (22.1) and the photodetector (11.1) for the first channel or the illuminant (21.1) for the first channel.

9. Device according to Claim 7 or 8, wherein the first and/or the second optical element (11.2, 21.2) are/is configured as a convex lens.

10. Device according to Claim 9, wherein the first and/or the second optical element (11.2, 21.2) are/ia configured as a planoconvex lens.

11. Device according to any of Claims 7 to 10, wherein the receiver circuit (11.3) and/or the transmitter circuit (21.3) are/is arranged with a radial offset relative to the illuminant (21.1), the photodetector (11.1), the first optical element (12.2) and the second optical element (22.2).

12. Device according to any of the preceding claims, wherein the first assembly (1) comprises a third optical element (11.2) and the second assembly (2) comprises a fourth optical clement (21.2) for forming the beam path (S1) of the optical signal of the first channel.

13. Device according to Claim 12, wherein the receiver circuit (11.3) and/or the transmitter circuit (21.3) are/is arranged with a radial offset relative to the third optical element (12.2) and the fourth optical element (21.2).

## Revendications

1. Dispositif de transmission sur deux canaux de signaux entre deux unités modulaires (1, 2) pouvant tourner l'une par rapport à l'autre autour d'un axe (A), la première unité modulaire (1) possédant un photodétecteur (11.1) et un circuit récepteur (11.3) électronique ainsi qu'au moins une ligne de liaison (11.4) entre le photodétecteur (11.1) et le circuit récepteur (11.3),
la deuxième unité modulaire (2) possédant un moyen lumineux (21.1) et un circuit émetteur (21.3) électronique ainsi qu'au moins une ligne de liaison (21.4) entre le moyen lumineux (21.1) et le circuit émetteur (21.3),
l'au moins une ligne de liaison (11.4, 21.4) de la première unité modulaire (1) et/ou de la deuxième unité modulaire (2) possédant au moins une portion (11.41, 21.41) qui s'étend avec une composante de direction radiale, et
en vue de la transmission d'un signal électrique sur un premier canal, ce signal électrique pouvant être converti par le circuit émetteur (21.3) et le moyen lumineux (21.1) en un signal optique qui peut de nouveau être converti en un signal électrique par le photodétecteur (11.1) et le circuit récepteur (11.3), et
un signal optique supplémentaire pouvant être transmis sur un deuxième canal, dont le trajet de faisceau (S2) passe avec une composante de direction axiale radialement à l'extérieur par rapport au trajet de faisceau (S1) du signal optique du premier canal à côté de la portion (11.41, 21.41) de l'au moins une ligne de liaison (11.4, 21.4), en vue de la transmission sur le deuxième canal, a) la première unité modulaire (1) possédant un moyen lumineux supplémentaire (12.1) et un circuit émetteur (12.3) électronique supplémentaire relié à celui-ci et la deuxième unité modulaire (2) possédant un photodétecteur supplémentaire (22.1) et un circuit récepteur (22.3) électronique supplémentaire relié à celui-ci ou
b) la première unité modulaire (1) possédant le photodétecteur supplémentaire (22.1) et une et le circuit récepteur (22.3) électronique supplémentaire relié à celui-ci et la deuxième unité modulaire (2) possédant le moyen lumineux supplémentaire (12.1) et le circuit émetteur (12.3) électronique supplémentaire relié à celui-ci,
le moyen lumineux (21.1) et le moyen lumineux supplémentaire (12.1) ainsi que le photodétecteur (11.1) et le photodétecteur supplémentaire (22.1) étant disposés de manière coaxiale par rapport à l'axe (A).

2. Dispositif selon la revendication 1, le moyen lumineux (21.1) et le photodétecteur (11.1) étant disposés géométriquement de telle sorte que ceux-ci sont traversés par l'axe (A).

3. Dispositif selon l'une des revendications précédentes, le circuit récepteur (11.3) et/ou le circuit émetteur (21.3) étant disposés avec un écart supérieur par rapport à l'axe (A) que l'écart du moyen lumineux (21.1) ou du photodétecteur (11.1) par rapport à l'axe (A).

4. Dispositif selon l'une des revendications précédentes, l'au moins une ligne de liaison (11.4, 21.4) servant également à la fixation mécanique du moyen lumineux (21.1) ou du photodétecteur (11.1).

5. Dispositif selon l'une des revendications précédentes, l'au moins une ligne de liaison (11.4, 21.4) étant mise en contact au niveau d'une broche (11.42 ; 21.42) du moyen lumineux (21.1) ou du photodétecteur (11.1).

6. Dispositif selon l'une des revendications précédentes, la portion (11.41, 21.41) qui s'étend avec une composante de direction radiale étant mise en contact au niveau d'un circuit imprimé (11.5, 21.5) qui se trouve à l'extérieur dans le sens radial par rapport à l'au moins une ligne de liaison (11.4, 21.4).

7. Dispositif selon l'une des revendications précédentes, la première unité modulaire (1) possédant un premier élément optique (12.2) et la deuxième unité modulaire (2) un deuxième élément optique (22.2), l'un des éléments optiques (12.2, 22.2) étant disposé axialement entre le moyen lumineux supplémentaire (12.1) et le photodétecteur (11.1) pour le premier canal ou le moyen lumineux (21.1) pour le premier canal.

8. Dispositif selon l'une des revendications précédentes, la première unité modulaire (1) possédant un premier élément optique (12.2) et la deuxième unité modulaire (2) un deuxième élément optique (22.2), l'un des éléments optiques (12.2, 22.2) étant disposé axialement entre le photodétecteur supplémentaire (22.1) et le photodétecteur (11.1) pour le premier canal ou le moyen lumineux (21.1) pour le premier canal.

9. Dispositif selon la revendication 7 ou 8, le premier et/ou le deuxième élément optique (11.2, 21.2) étant réalisés sous la forme d'une lentille convexe.

10. Dispositif selon la revendication 9, le premier et/ou le deuxième élément optique (11.2, 21.2) étant réalisés sous la forme d'une lentille plan-convexe.

11. Dispositif selon l'une des revendications 7 à 10, le circuit récepteur (11.3) et/ou le circuit émetteur (21.3) étant disposés avec un décalage radial par rapport au moyen lumineux (21.1), au photodétecteur (11.1), au premier élément optique (12.2) et au deuxième élément optique (22.2).

12. Dispositif selon l'une des revendications précédentes, la première unité modulaire (1) possédant un troisième élément optique (11.2) et la deuxième unité modulaire (2) un quatrième élément optique (21.2) pour le formage du trajet de faisceau (S1) du signal optique du premier canal.

13. Dispositif selon la revendication 12, le circuit récepteur (11.3) et/ou le circuit émetteur (21.3) étant disposés avec un décalage radial par rapport au troisième élément optique (12.2) et au quatrième élément optique (21.2).
